# EUROPÄISCHE PATENTSCHRIFT

(11) **EP 3 290 163 B1**
(45) Veröffentlichungstag und Bekanntmachung des Hinweises auf die Patenterteilung: **06.11.2019**
(21) Anmeldenummer: 17189657.4
(22) Anmeldetag: 06.09.2017
(51) Int. Cl.: B25J 5/02, B25J 9/04, B25J 11/00, B23Q 1/48, B23Q 1/54, B23C 3/12

(54) **WERKZEUGMASCHINE ZUR SPANENDEN BEARBEITUNG EINES WERKSTÜCKS SOWIE SPINDELTRÄGERBAUGRUPPE ZUM EINSATZ AN EINER DERARTIGEN WERKZEUGMASCHINE**
MACHINE TOOL FOR MACHINING A WORK PIECE AND A SPINDLE CARRIER ASSEMBLY FOR USE ON SUCH A MACHINE TOOL
MACHINE-OUTIL D'USINAGE PAR ENLÈVEMENT DE COPEAUX D'UNE PIÈCE À USINER AINSI QU'ENSEMBLE DE PORTE-BROCHE DESTINÉ À ÊTRE UTILISÉ DANS UNE TELLE MACHINE-OUTIL

(30) Priorität: 06.09.2016 DE 102016216902
(43) Veröffentlichungstag der Anmeldung: 07.03.2018
(73) Patentinhaber: DECKEL MAHO Pfronten GmbH, 87459 Pfronten (DE)
(72) Erfinder: KSCHIER, Uwe, 87629 Füssen (DE); GEIßLER, Alfred, 87459 Pfronten (DE)
(74) Vertreter: MERH-IP Matias Erny Reichl Hoffmann Patentanwälte PartG mbB

(56) Entgegenhaltungen:
- EP-A2- 2 631 040
- DE-A1-102009 020 771
- DE-A1-102014 206 683
- DE-U1-202011 100 455
- JP-A- 2001 260 068

## Beschreibung

Die vorliegende Erfindung betrifft eine Spindelträgerbaugruppe zum Einsatz an einer Werkzeugmaschine sowie eine Werkzeugmaschine zur spanenden bzw. zerspanenden Bearbeitung eines Werkstücks mit einer derartigen Spindelträgerbaugruppe.

### HINTERGRUND DER ERFINDUNG

Im Stand der Technik sind Werkzeugmaschinen mit werkzeugtragender Arbeitsspindel bekannt. Diese sind heutzutage zumeist mit numerischen Steuerungen versehen und z.B. als Fräsmaschinen, Fräszentren, Universal-Fräsmaschinen oder CNC-Bearbeitungszentren mit vier, fünf oder manchmal auch mehr als fünf numerisch ansteuerbaren Linear- und/oder Dreh- bzw. Schwenkachsen bekannt, siehe hierzu z.B. die Werkzeugmaschine gemäß DE 10 2010 064 271 A1.

Abzugrenzen sind derartige Werkzeugmaschinen mit werkzeugtragender Arbeitsspindel von Werkzeugmaschinen mit werkstücktragender Arbeitsspindel, wie z.B. Drehmaschinen, Drehzentren, Doppelspindel-Drehmaschinen, Mehrfachspindel-Drehmaschinen oder Mehrfachspindel-Drehautomaten.

Bei derartigen Werkzeugmaschinen, insbesondere Fräsmaschinen, Fräszentren, Universal-Fräsmaschinen oder CNC-Bearbeitungszentren, wird die Arbeitsspindel zumeist mittels mehrerer Linearachsen in verschiedene Richtung bewegt (z.B. Fahrständerfräsmaschine). Dies ist insbesondere für die Bearbeitung kubischer oder annähernd kubischer Werkstücke geeignet.

Aus der JP 2001-260068 A ist ein Industrieroboter nach dem Oberbegriff des beigefügten Anspruchs 1 bekannt, der an seinem freien Ende eine um eine Vielzahl von Achsen bewegliche Einheit, insbesondere eine Schweißeinheit, aufnehmen kann.

Es ist eine grundsätzliche Aufgabe auf dem Gebiet des Werkzeugmaschinenbaus als auch insbesondere eine zugrunde liegende Aufgabe der vorliegenden Erfindung, eine Werkzeugmaschine mit werkzeugtragender Arbeitsspindel, insbesondere eine Werkzeugmaschine für fräsende und/oder bohrende Bearbeitung eines Werkstücks, bereitzustellen, die gleichzeitig präzise und zuverlässig mit möglichst kleinen Standzeiten arbeitet, als auch kostengünstig, kompakt und effizient bereitgestellt werden kann.

Insbesondere auf dem Gebiet des Ausführens von Fräsarbeiten an Werkstücken aus Verbundwerkstoff, insbesondere kohlenstofffaserverstärktem Kunststoff bzw. CFK, sind flexiblere und gleichzeitig genaue Bearbeitungen bei hohen Stückzahlen erforderlich. Für die Bearbeitung derartiger Bauteile, insbesondere größerer Bauteile, für die Industrieroboter nicht verwendet werden können, wird ein Maschinenkonzept benötigt, das eine hohe Bearbeitungsbewegungsflexibilität bei hohen Freiheitsgraden hoher Steifigkeit und hoher Bearbeitungsgenauigkeit sowie -effizienz ermöglicht.

Es ist somit eine Aufgabe der vorliegenden Erfindung, eine Spindelträgerbaugruppe und eine Werkzeugmaschine zu schaffen bzw. vorzuschlagen, die eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

### ZUSAMMENFASSUNG DER ERFINDUNG

Gemäß der vorliegenden Erfindung wird zur Lösung der vorstehend genannten Aufgaben eine Spindelbauträgergruppe gemäß Anspruch 1 sowie eine Werkzeugmaschine nach Anspruch 15 vorgeschlagen. Die abhängigen Ansprüche betreffen bevorzugte Ausführungsbeispiele der Erfindung.

Insbesondere wird eine Spindelträgerbaugruppe zum Einsatz an einer Werkzeugmaschine bereitgestellt, wobei die Spindelträgerbaugruppe bevorzugt aufweist: einen auf dem Maschinenbett angeordneten Schwenkarmaufnahmeabschnitt, einen an dem Schwenkarmaufnahmeabschnitt um eine erste Rotationsachse schwenkbar gelagerten ersten Schwenkarm, einen an dem ersten Schwenkarm um eine zweite Rotationsachse schwenkbar gelagerten zweiten Schwenkarm, einen an dem zweiten Schwenkarm um eine dritte Rotationsachse drehbar gelagerten Spindelträgerarm, einen an dem Spindelträgerarm um eine vierte Rotationsachse drehbar gelagerten Fräskopf, und eine an dem Fräskopf gehaltene Arbeitsspindel zur Aufnahme eines Werkzeugs, wobei die dritte Rotationsachse senkrecht oder quer zur vierten Rotationsachse ausgerichtet ist, der Schwenkarmaufnahmeabschnitt zwei Schwenkarmhaltekörper aufweist, und wobei der erste Schwenkarm zwischen den beiden Schwenkarmhaltekörpern schwenkbar gelagert gehalten ist; wobei einer der Schwenkarmhaltekörper kleiner ausgebildet ist, als der andere Schwenkarmhaltekörper der beiden Schwenkarmhaltekörper, wobei der zweite Schwenkarm an der dem kleineren Schwenkarmhaltekörper zugewandten Seite des ersten Schwenkarms gehalten ist.

Dies ermöglicht somit eine freiere Bewegung mit weniger Bauteilen und freierem Bearbeitungsraum mit einer größeren Bewegungsfreiheit im Arbeitsraum bei gleichen Freiheitsgraden einer Vier- oder Fünf-Achs-Fräsmaschine herkömmlicher Bauweise. Gleichzeitig können hochsteife Baugruppen mit hochpräzisen Antrieben und Schwenk- bzw. Rundachsen bereitgestellt werden, so dass gleiche bzw. sogar höhere Bearbeitungsgenauigkeiten erreicht werden können, wie bei Vier- oder Fünf-Achs-Fräsmaschinen herkömmlicher Bauweise (Fahrständerfräsmaschine).

Insbesondere ermöglicht es die vorliegende Erfindung, ein Werkzeugmaschinenkonzept zu schaffen bzw. bereitzustellen, die eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

Insbesondere kann somit ein Werkzeugmaschinenkonzept bereitgestellt werden, die bei dem Ausführen von Fräsarbeiten an Werkstücken aus Verbundwerkstoff, insbesondere kohlenstofffaserverstärktem Kunststoff bzw. CFK, flexiblere und gleichzeitig genaue Bearbeitungen bei hohen Stückzahlen ermöglicht. Es wird ein Maschinenkonzept bereitgestellt, das eine hohe Bearbeitungsbewegungsflexibilität bei hohen Freiheitsgraden hoher Steifigkeit und hoher Bearbeitungsgenauigkeit sowie -effizienz ermöglicht.

In zweckmäßigen bevorzugten Ausführungsbeispielen ist die zweite Rotationsachse parallel zur ersten Rotationsachse ausgerichtet. In zweckmäßigen bevorzugten Ausführungsbeispielen ist die dritte Rotationsachse senkrecht oder quer zur zweiten Rotationsachse ausgerichtet. In zweckmäßigen bevorzugten Ausführungsbeispielen ist eine Spindelachse der Arbeitsspindel senkrecht oder quer zur vierten Rotationsachse ausgerichtet.

In zweckmäßigen bevorzugten Ausführungsbeispielen ist ein Werkzeugspannabschnitt relativ zu dem Schwenkarmaufnahmeabschnitt auf dem Maschinenbett in zumindest einer Linearachsrichtung linear verfahrbar angeordnet. In zweckmäßigen bevorzugten Ausführungsbeispielen ist der Schwenkarmaufnahmeabschnitt auf einem Achsschlitten angeordnet, der auf dem Maschinenbett linear verfahrbar ist. In zweckmäßigen bevorzugten Ausführungsbeispielen ist der Achsschlitten in einer zur ersten Rotationsachse parallel ausgerichteten Richtung linear verfahrbar.

Dies ermöglicht somit eine freiere Bewegung mit weniger Bauteilen und freierem Bearbeitungsraum mit einer größeren Bewegungsfreiheit im Arbeitsraum bei gleichen Freiheitsgraden einer Fünf-Achs-Fräsmaschine herkömmlicher Bauweise. Gleichzeitig können hochsteife Baugruppen mit hochpräzisen Antrieben und Schwenk- bzw. Rundachsen bereitgestellt werden, so dass gleiche bzw. sogar höhere Bearbeitungsgenauigkeiten erreicht werden können, wie bei Fünf-Achs-Fräsmaschinen herkömmlicher Bauweise (Fahrständerfräsmaschine).

In zweckmäßigen bevorzugten Ausführungsbeispielen weist jeder der beiden Schwenkarmhaltekörper des Schwenkarmaufnahmeabschnitts zumindest einen Antrieb zum Antreiben einer Schwenkbewegung des ersten Schwenkarms auf. Dies verbessert die Steifigkeit des Aufbaus, die Gleichmäßigkeit der Schwenksteuerung und die erreichbare Genauigkeit bei der Bearbeitung.

In zweckmäßigen bevorzugten Ausführungsbeispielen weist jeder der beiden Schwenkarmhaltekörper des Schwenkarmaufnahmeabschnitts zumindest ein verspanntes Getriebe zum Übertragen eines Drehmoments beim Antreiben einer Schwenkbewegung des ersten Schwenkarms auf. Dies verbessert die Gleichmäßigkeit der Schwenksteuerung und die erreichbare Genauigkeit bei der Bearbeitung.

In zweckmäßigen bevorzugten Ausführungsbeispielen weist der erste Schwenkarm zumindest einen Antrieb zum Antreiben einer Schwenkbewegung des zweiten Schwenkarms auf. In zweckmäßigen bevorzugten Ausführungsbeispielen weist der erste Schwenkarm zumindest ein verspanntes Getriebe zum Übertragen eines Drehmoments beim Antreiben einer Schwenkbewegung des zweiten Schwenkarms auf.

In zweckmäßigen bevorzugten Ausführungsbeispielen weist jedes der verspannten Getriebe zumindest ein angetriebenes Antriebselement und zumindest zwei antreibende Antriebselemente auf, die gleichzeitig mit dem angetriebenen Antriebselement zusammenwirken. Dies verbessert die Gleichmäßigkeit der Schwenksteuerung und die erreichbare Genauigkeit bei der Bearbeitung.

In zweckmäßigen bevorzugten Ausführungsbeispielen weist der zweite Schwenkarm zumindest einen Antrieb zum Antreiben einer Rotationsbewegung des Spindelträgerarms auf. In zweckmäßigen bevorzugten Ausführungsbeispielen ist der Antrieb zum Antreiben der Rotationsbewegung des Spindelträgerarms als Torqueantrieb, insbesondere gekühlter Torqueantrieb, ausgebildet. Dies verbessert die Gleichmäßigkeit der Drehsteuerung und die erreichbare Genauigkeit bei der Bearbeitung.

In zweckmäßigen bevorzugten Ausführungsbeispielen weist der Spindelträgerarm zumindest einen Antrieb zum Antreiben einer Rotationsbewegung des Fräskopfs auf. In zweckmäßigen bevorzugten Ausführungsbeispielen ist der Antrieb zum Antreiben der Rotationsbewegung des Fräskopfs als Torqueantrieb, insbesondere gekühlter Torqueantrieb, ausgebildet. Dies verbessert die Gleichmäßigkeit der Drehsteuerung und die erreichbare Genauigkeit bei der Bearbeitung.

In zweckmäßigen bevorzugten Ausführungsbeispielen umfasst die Spindelträgerbaugruppe ein Werkzeugmagazin zum Lagern von einer Mehrzahl von Werkzeugen zum Ein- bzw. Auswechseln von Werkzeugen an der Arbeitsspindel.

In zweckmäßigen bevorzugten Ausführungsbeispielen ist zusätzlich zu einer ersten Spindelträgerbaugruppe, die den Schwenkarmaufnahmeabschnitt, den ersten Schwenkarm, den zweiten Schwenkarm, den Spindelträgerarm, den Fräskopf und die Arbeitsspindel umfasst, eine zweite Spindelträgerbaugruppe auf dem Maschinenbett angeordnet.

In zweckmäßigen bevorzugten Ausführungsbeispielen umfasst die zweite Spindelträgerbaugruppe: einen auf einem Maschinenbett der Werkzeugmaschine angeordneten zweiten Schwenkarmaufnahmeabschnitt, einem an dem zweiten Schwenkarmaufnahmeabschnitt um eine fünfte Rotationsachse schwenkbar gelagerten dritten Schwenkarm, einem an dem dritten Schwenkarm um eine sechste Rotationsachse schwenkbar gelagerten vierten Schwenkarm, einem an dem vierten Schwenkarm um eine siebte Rotationsachse drehbar gelagerten zweiten Spindelträgerarm, einem an dem zweiten Spindelträgerarm um eine achte Rotationsachse drehbar gelagerten zweiten Fräskopf, und/oder einer an dem zweiten Fräskopf gehaltenen zweiten Arbeitsspindel zur Aufnahme eines Werkzeugs, wobei die siebte Rotationsachse bevorzugt senkrecht oder quer zur achten Rotationsachse ausgerichtet ist.

In zweckmäßigen bevorzugten Ausführungsbeispielen sind die erste, zweite, fünfte und sechste Rotationsachse jeweils parallel zueinander ausgerichtet, wobei insbesondere die erste und fünfte Rotationsachse bevorzugt koaxial zueinander ausgerichtet sind.

In zweckmäßigen bevorzugten Ausführungsbeispielen sind die erste und zweite Spindelträgerbaugruppe in der Richtung der ersten und/oder fünften Rotationsachse nebeneinander auf dem Maschinenbett angeordnet.

Gemäß einem weiteren Aspekt wird eine Werkzeugmaschine mit einer erfindungsgemäßen Spindelträgerbaugruppe zum Einsatz an der erfindungsgemäßen Werkzeugmaschine vorgeschlagen.

Zusammenfassend ermöglicht es die vorliegende Erfindung, ein Werkzeugmaschinenkonzept zu schaffen bzw. bereitzustellen, das eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

Insbesondere kann somit ein Werkzeugmaschinenkonzept bereitgestellt werden, das bei dem Ausführen von Fräsarbeiten an Werkstücken aus Verbundwerkstoff, insbesondere
kohlenstofffaserverstärktem Kunststoff bzw. CFK, flexiblere und gleichzeitig genaue Bearbeitungen bei hohen Stückzahlen ermöglicht. Es wird ein Maschinenkonzept bereitgestellt, das eine hohe Bearbeitungsbewegungsflexibilität bei hohen Freiheitsgraden hoher Steifigkeit und hoher Bearbeitungsgenauigkeit sowie -effizienz ermöglicht.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

**Fig. 1** zeigt eine beispielhafte Perspektivdarstellung einer Werkzeugmaschine gemäß einem Ausführungsbeispiel der Erfindung von schräg oben links vorne;
**Fig. 2** zeigt eine weitere beispielhafte Perspektivdarstellung der Werkzeugmaschine gemäß Fig. 1 von schräg oben rechts vorne;
**Fig. 3** zeigt eine weitere beispielhafte Perspektivdarstellung der Werkzeugmaschine gemäß Fig. 1 von schräg oben links vorne;
**Fig. 4** zeigt eine weitere beispielhafte Perspektivdarstellung der Werkzeugmaschine gemäß Fig. 1 von schräg oben links hinten;
**Fig. 5** zeigt eine weitere beispielhafte Perspektivdarstellung der Werkzeugmaschine gemäß Fig. 1 von schräg oben links vorne;
**Fig. 6** zeigt eine beispielhafte rechte Seitenansicht der Werkzeugmaschine gemäß Fig. 1;
**Fig. 7** zeigt eine beispielhafte linke Seitenansicht der Werkzeugmaschine gemäß Fig. 1;
**Fig. 8** zeigt eine beispielhafte Vorderansicht der Werkzeugmaschine gemäß Fig. 1;
**Fig. 9** zeigt eine beispielhafte Draufsicht der Werkzeugmaschine gemäß Fig. 1;
**Fig. 10** zeigt eine beispielhafte Rückansicht der Werkzeugmaschine gemäß Fig. 1;
**Fig. 11** zeigt eine beispielhafte Perspektivdarstellungen einer Spindelträgerbaugruppe einer Werkzeugmaschine gemäß einem Ausführungsbeispiel der Erfindung;
**Figs. 12 bis 14** zeigen weitere Perspektivdarstellungen einer Spindelträgerbaugruppe gemäß Fig. 11;
**Fig. 15** zeigt eine beispielhafte rechte Seitenansicht der Spindelträgerbaugruppe gemäß Fig. 11;
**Fig. 16** zeigt eine beispielhafte linke Seitenansicht der Spindelträgerbaugruppe gemäß Fig. 11;

### DETAILLIERTE BESCHREIBUNG DER FIGUREN UND BEVORZUGTER AUSFÜHRUNGSBEISPIELE

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der beigefügten Ansprüche umfasst sind.

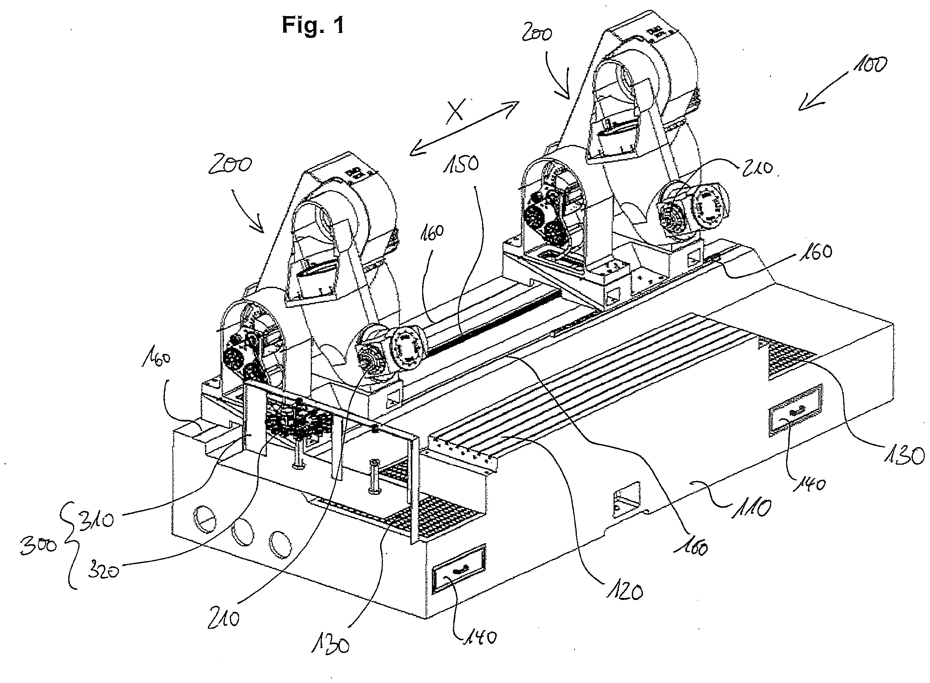

Fig. 1 zeigt eine beispielhafte Perspektivdarstellung einer Werkzeugmaschine 100 gemäß einem Ausführungsbeispiel der Erfindung von schräg oben links vorne.

Die Werkzeugmaschine 100 weist ein Maschinenbett 110 (Maschinengestell) auf, das auf einer Oberfläche z.B. einer Werkshalle aufstellbar ist. Zusätzlich zu den dargestellten Komponenten kann die Werkzeugmaschine 100 zusätzlich weitere Bauteile aufweisen, wie z.B. ein Maschinengehäuse mit einer oder mehrerer zum Maschinen- bzw. Bearbeitungsraum öffenbaren Türen, ein oder mehrere Bedienpulte zum Bedienen der Werkzeugmaschine durch einen Bediener, eine Werkstück- bzw. Palettenwechselvorrichtung, ein angebautes größeres Werkzeugmagazin mit Wechsel- bzw. Handhabungsvorrichtung und andere Werkzeugmaschinenbauteile bzw. Zubehörteile.

Die Werkzeugmaschine 100 weist zudem einen Werkstückspannbereich 120 (Werkzeugspanntisch) auf, auf dem ein oder mehrere Werkstücke zur Bearbeitung an der Werkzeugmaschine eingespannt werden können. In diesem Ausführungsbeispiel ist beispielhaft ein einfacher als Werkzeugtisch ausgebildeter Werkstückspannbereich 120 bereitgestellt. In weiteren Ausführungsbeispielen ist es jedoch möglich, einen oder mehrere Dreh- bzw. Schwenktische bereitzustellen, auf denen das Werkstück eingespannt werden kann und um eine, zwei oder gar drei Rotationsachsen drehbar bzw. verschwenkbar gesteuert werden kann. Weiterhin ist es möglich, einen oder mehrere Werkzeugtisch (ohne oder mit einem oder mehreren Dreh- bzw. Schwenktischen) auf einem oder mehreren Linearachsschlitten anzuordnen, die auf dem Maschinenbett linear verfahrbar angeordnet sein können.

In diesem Ausführungsbeispiel ist der Werkstückspannbereich 120 als einfacher Werkzeugtisch ausgebildet, der auf einer oberen Seite des Maschinengestells 110 angeordnet ist. Um den Werkzeugspannbereich 120 herum weist das Maschinengestell 110 Hohlräume auf, die oberseitig beispielhaft mit Gitterabschnitten 130 abgedeckt sind. Bei der zerspanenden Bearbeitung des auf dem Werkstückspannbereich 120 eingespannten Werkstücks anfallende Späne können somit durch die Gitterabschnitte 130 in jeweilige Spänebehälter 140 in den Hohlräumen des Maschinengestells 110 hineinfallen und gesammelt werden. Die Spänebehälter 140 können zur Entsorgung der Späne schubladenartig entnommen werden. In weiteren Ausführungsbeispielen ist es möglich, automatische Spänefördereinrichtungen in die Hohlräume des Maschinengestells unter den Gitterabschnitten 130 einzubringen.

Auf einer hinteren Seite des Maschinengestells 110 der Werkzeugmaschine 100 sind beispielhaft zwei Spindelträgerbaugruppen 200 mit einer jeweiligen werkzeugtragenden Arbeitsspindel 210 angeordnet. Die Arbeitsspindeln 210 sind jeweils dazu eingerichtet, ein jeweiliges Werkzeug, insbesondere Fräswerkzeug, aufzunehmen und um die jeweilige Spindelachse rotatorisch zur Erzeugung einer Schneidbewegung anzutreiben.

Zudem ist jede der Spindelträgerbaugruppen 200 beispielhaft auf Linearführungen 160 linear verfahrbar auf dem Maschinengestell 110 angeordnet. Die Spindelträgerbaugruppen 200 können beispielhaft jeweils unabhängig voneinander auf dem Maschinengestell 110 entlang der Linearführungen 160 in einer Richtung der X-Achse (X-Richtung) parallel zu dem Werkstückspannbereich 120 verfahren werden, insbesondere um eine lineare Relativbewegung der an den Arbeitsspindeln 210 aufgenommenen Werkzeuge relativ zu einem bzw. mehreren auf dem Werkstückspannbereich 120 eingespannten Werkstücken zu ermöglichen.

Parallel zu den Linearführungen 160 ist hierzu auf dem Maschinengestell 110 weiterhin beispielhaft eine Gewindewelle 150 in X-Richtung angeordnet, in die jeweilige Gegenmutterelemente (nicht dargestellt) an den Unterseiten der Spindelträgerbaugruppen 200 eingreifen, und durch deren unabhängiges rotatorisches Antreiben die Spindelträgerbaugruppen 200 jeweils unabhängig voneinander entlang der Gewindewelle 150 auf den Linearführungen 160 gelagert verfahren werden.

Auf einer Seite des Maschinengestells 110 ist weiterhin beispielhaft ein Werkzeugmagazinrad 320 eines Werkzeugmagazins 300 bereitgestellt, das mittels eines Magazinrahmens 310 an dem Maschinengestell 110 befestigbar ist. Das Werkzeugmagazinrad 320 ist beispielhaft horizontal ausgerichtet und um eine vertikale Rotationsachse drehbar gehalten. Umfänglich des Werkzeugmagazinrads 320 weist das Werkzeugmagazinrad 320 eine Mehrzahl von Werkzeugaufnahmeabschnitten auf, an denen Werkzeuge gehalten bzw. aufgenommen werden können.

Für einen Werkzeugwechsel ist die linke Spindelträgerbaugruppe 200 in Fig. 1 dazu eingerichtet, auf den Linearführungen 160 nach links zu dem Werkzeugmagazinrad 320 zu verfahren und ein in der Arbeitsspindel 210 aufgenommenes Werkzeug in einer Werkzeugaufnahme des Werkzeugmagazinrads 320 abzulegen bzw. ein einzuwechselndes Werkzeug aus einer Werkzeugaufnahme des Werkzeugmagazinrads 320 herauszunehmen und in der Arbeitsspindel 210 aufzunehmen, um mit dem eingewechselten Werkzeug die Bearbeitung des Werkstücks weiterzuführen. Das Werkzeugmagazinrad 320 ist bei, vor und nach dem Werkzeugwechsel dazu eingerichtet, durch Rotation die der Spindelträgerbaugruppe 200 zugewandte(n) Werkzeugaufnahme(n) durch zu rotieren.

Hierbei ist in Fig. 1 beispielhaft nur ein kleines Werkzeugmagazin 300 mit einem kleinen Werkzeugmagazinrad 320 an einer Seite des Maschinengestells 100 gezeigt. Zudem kann ein Werkzeugmagazin 300 auch an der anderen Seite des Maschinengestells 100 für die andere Spindelträgerbaugruppe 200 bereitgestellt werden. Weiterhin können auf beiden Seiten auch Werkzeugmagazine mit mehreren Werkzeugmagazinrädern 320 nebeneinander und/oder auch beabstandet übereinander bereitgestellt werden.

Weiterhin können größere Zulieferwerkzeugmagazine bereitgestellt werden, die vorgehaltene Werkzeuge an den einen oder mehreren Werkzeugmagazinrädern 320 aus einem größeren Werkzeugspeicher beliefernd ein- und auswechseln.

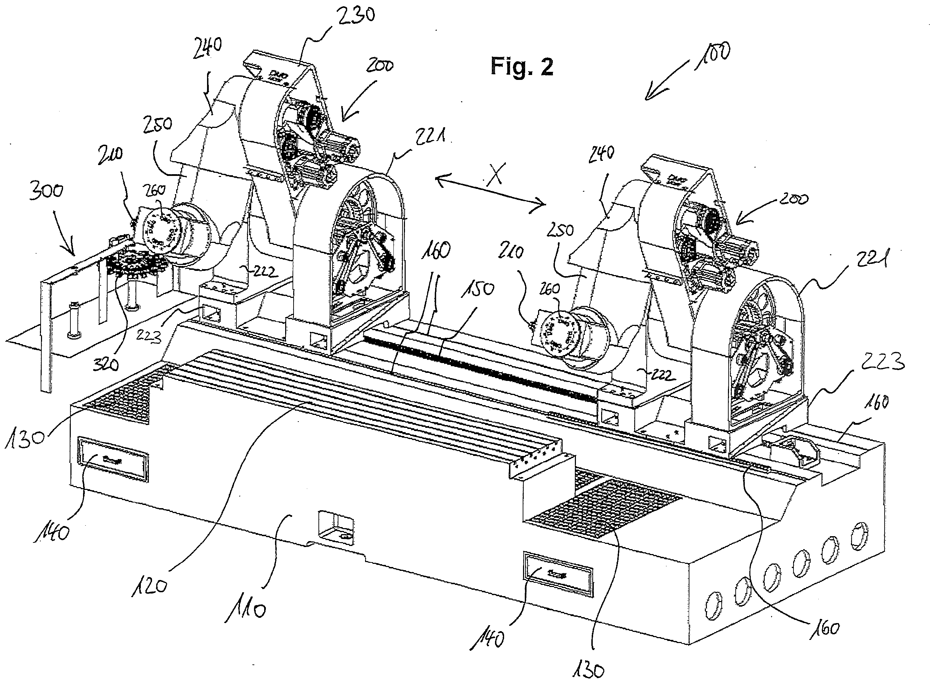

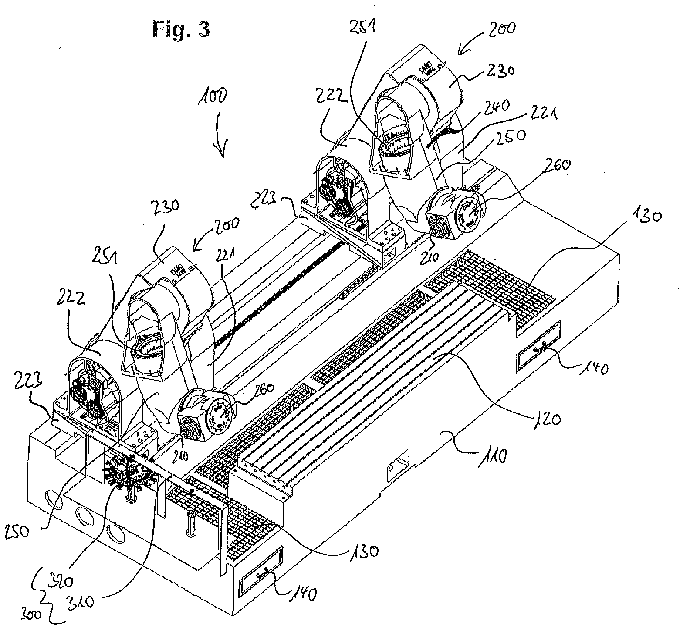

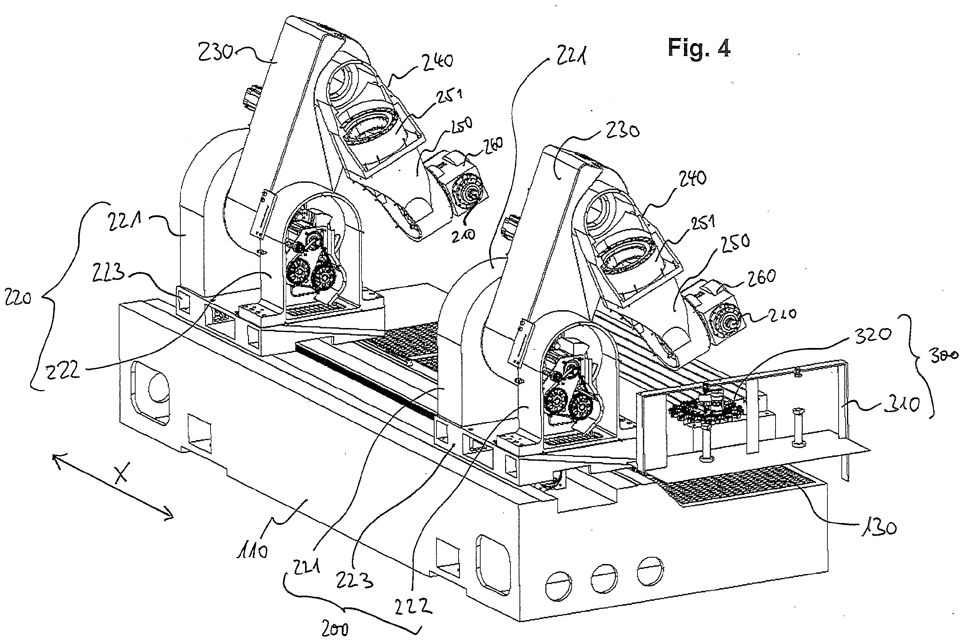

Figs. 2 bis 5 zeigen weitere beispielhafte Perspektivdarstellungen der Werkzeugmaschine 100 gemäß Fig. 1. Insbesondere zeigen die Figs. 2 bis 5 weitere Darstellungen der auf dem Maschinengestell 110 angeordneten Spindelträgerbaugruppen 200.

Die Spindelträgerbaugruppen 200 sind beispielhaft baugleich ausgeführt, und es wird beispielhaft nur eine der Spindelträgerbaugruppen 200 beschrieben.

Die Spindelträgerbaugruppen können in weiteren Ausführungsbeispielen jedoch auch mit unterschiedlichen Bauweisen bereitgestellt werden. In weiteren Ausführungsbeispielen können auch nur eine oder mehr als zwei Spindelträgerbaugruppen bereitgestellt werden.

Die Spindelträgerbaugruppe 200 weist einen Schwenkarmaufnahmeabschnitt 220 auf, der zwei Schwenkarmhaltekörper 221 und 222 aufweist, die beide auf einem Linearachsschlitten 223 angeordnet sind.

Der Linearachsschlitten 223 ist auf den Linearführungen 160 in X-Richtung linear verfahrbar gelagert. Die Schwenkarmhaltekörper 221 und 222 sind in X-Richtung nebeneinander auf dem Linearachsschlitten 223 angeordnet.

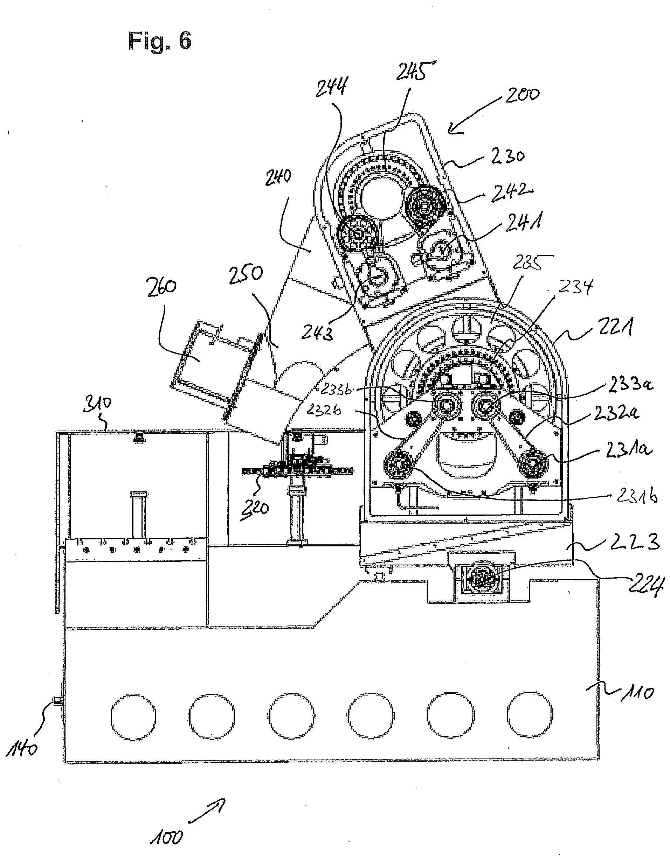

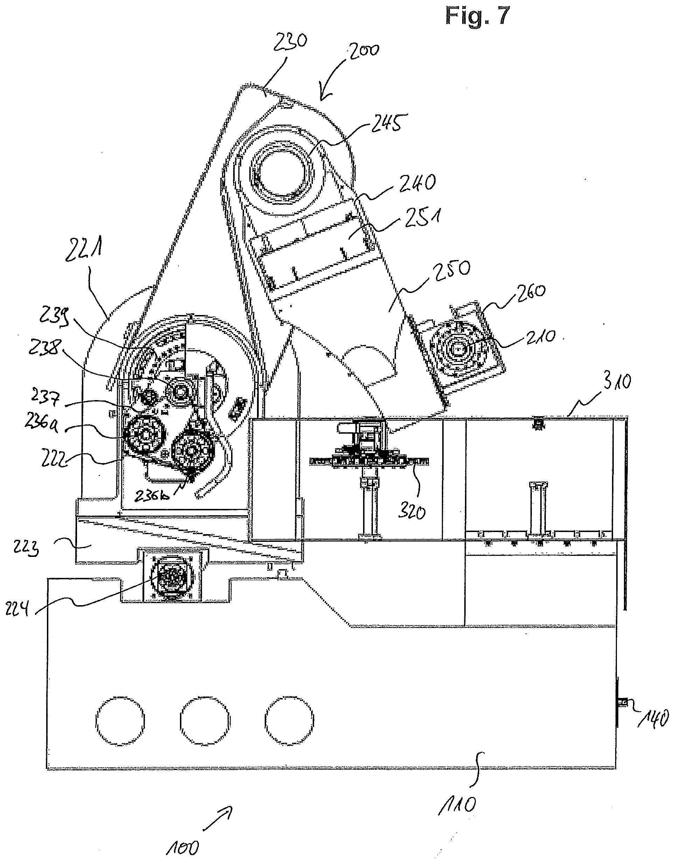

Zwischen den Schwenkarmhaltekörpern 221 und 222 wird ein Ende eines ersten Schwenkarms 230 schwenkbar gehalten. Antriebe werden später in Zusammenhang mit Figs. 6 und 7 beschrieben.

Das andere Ende des ersten Schwenkarms 230 hält einen weiteren zweiten Schwenkarm 240, und der zweite Schwenkarm 240 ist schwenkbar an dem ersten Schwenkarm 230 gelagert. Antriebe werden später in Zusammenhang mit Figs. 6 und 7 beschrieben.

Das andere Ende des zweiten Schwenkarms 240 hält einen Spindelträgerarm 250, der an dem zweiten Schwenkarm 240 drehbar gelagert ist. Der zweite Schwenkarm 240 trägt hierbei einen Antrieb 251 zum Antreiben der Drehbewegung des Spindelträgerarms 250. Der Antrieb 251 ist beispielhaft als gekühlter Torqueantrieb ausgebildet.

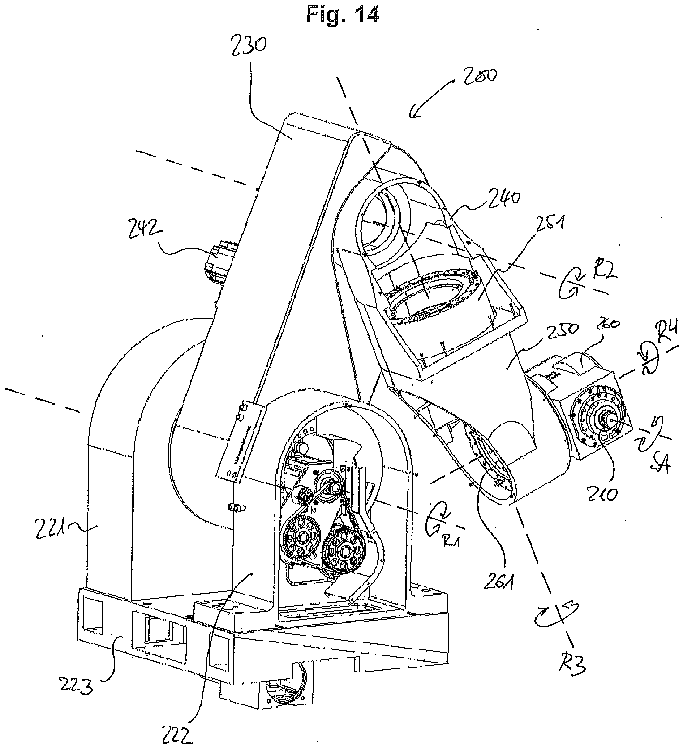

Das andere Ende des Spindelträgerarms 250 hält einen Fräskopf 260, der an dem Spindelträgerarm 250 drehbar gelagert ist. Der Spindelträgerarm 250 trägt hierbei einen Antrieb 261 zum Antreiben der Drehbewegung des Fräskopfes 260 (siehe Fig. 14). Der Antrieb 261 ist beispielhaft als gekühlter Torqueantrieb ausgebildet.

Der Fräskopf 260 umfasst die bereits beschriebene Arbeitsspindel 210 sowie einen nicht dargestellten Spindelantrieb zum Antreiben der Arbeitsspindel für das rotatorische Antreiben des aufgenommenen Werkzeugs zum Erzeugen der Schnittbewegung.

Figs. 6 und 7 zeigen Seitenansichten der Werkzeugmaschine 100 gemäß Fig. 1. Insbesondere zeigen die Figs. 6 und 7 weitere Darstellungen der auf dem Maschinengestell 110 angeordneten Spindelträgerbaugruppen 200.

Zwischen den Schwenkarmhaltekörpern 221 und 222 wird ein Ende des ersten Schwenkarms 230 schwenkbar gehalten. In diesem Ausführungsbeispiel sind in jedem der beiden Schwenkarmhaltekörpern 221 und 222 Antriebe und Getriebe zum Antreiben der Schwenkbewegung des ersten Schwenkarms 230 bereitgestellt.

Wie in Fig. 6 beispielhaft dargestellt ist, weist der Schwenkarmhaltekörper 221 beispielhaft zwei Antriebe 233a und 233b auf, die beispielhaft jeweils über Antriebsriemen 232a und 232b jeweilige Antriebsritzel 231a und 231b (antreibende Antriebselemente) eines Getriebes zum Übertragen eines Drehmoments auf den ersten Schwenkarm 230 antreiben. Die Antriebsritzel 231a und 231b sind mit einem angetriebenen Zahnrad 235 (beispielhaft als Stirnrad ausgebildet) als beispielhaftes angetriebenes Antriebselement verspannt in Eingriff gebracht. Das angetriebene Zahnrad 235 ist beispielhaft über einen Lagerring 234 drehfest mit dem ersten Schwenkarm 230 befestigt, welcher drehbar an dem Schwenkarmhaltekörper 221 gelagert ist.

Der verspannte Eingriff der beiden Antriebsritzel 231a und 231b an dem angetriebenen Zahnrad 235 bewirkt den Vorteil, dass bei einem Übergang von Antreiben gegen und dann im Uhrzeigersinn bzw. umgekehrt kein Spiel in den Zahnzwischenräumen zum Tragen kommt und ein spielfreier und präziser Übergang beim Steuern erst gegen und dann im Uhrzeigersinn bzw. umgekehrt ermöglicht ist. Dies ermöglicht eine hervorragende Präzision der Steuerung der Schwenkbewegung des ersten Schwenkarms 230.

Wie in Fig. 7 beispielhaft dargestellt ist, weist der Schwenkarmhaltekörper 222 beispielhaft einen Antrieb 238 auf, der beispielhaft über den Antriebsriemen 237 zwei Antriebsritzel 236a und 236b (antreibende Antriebselemente) eines Getriebes zum Übertragen eines Drehmoments auf den ersten Schwenkarm 230 antreibt. Die Antriebsritzel 236a und 236b sind mit einem angetriebenen Zahnrad 239 (beispielhaft als Stirnrad ausgebildet) als beispielhaftes angetriebenes Antriebselement verspannt in Eingriff gebracht. Das angetriebene Zahnrad 239 ist beispielhaft drehfest mit dem ersten Schwenkarm 230 befestigt, welcher drehbar an dem Schwenkarmhaltekörper 222 gelagert ist.

Der verspannte Eingriff der beiden Antriebsritzel 236a und 236b an dem angetriebenen Zahnrad 239 bewirkt den Vorteil, dass bei einem Übergang von Antreiben gegen und dann im Uhrzeigersinn bzw. umgekehrt kein Spiel in den Zahnzwischenräumen zum Tragen kommt und ein spielfreier und präziser Übergang beim Steuern erst gegen und dann im Uhrzeigersinn bzw. umgekehrt ermöglicht ist. Dies ermöglicht eine hervorragende Präzision der Steuerung der Schwenkbewegung des ersten Schwenkarms 230.

Das andere Ende des ersten Schwenkarms 230 hält den weiteren zweiten Schwenkarm 240, und der zweite Schwenkarm 240 ist schwenkbar an dem ersten Schwenkarm 230 gelagert.

Wie in Fig. 6 beispielhaft dargestellt ist, weist der erste Schwenkarm 230 beispielhaft zwei Antriebe 241 und 243 auf, die beispielhaft jeweils über Antriebsriemen jeweilige Antriebsritzel 242 und 244 (antreibende Antriebselemente) eines Getriebes zum Übertragen eines Drehmoments auf den zweiten Schwenkarm 240 antreiben. Die Antriebsritzel 242 und 244 sind mit einem angetriebenen Zahnrad 245 (beispielhaft als Hohlrad ausgebildet) als beispielhaftes angetriebenes Antriebselement verspannt in Eingriff gebracht. Das angetriebene Zahnrad 245 ist beispielhaft drehfest mit dem zweiten Schwenkarm 240 befestigt, welcher drehbar an dem ersten Schwenkarm 230 gelagert ist.

Der verspannte Eingriff der beiden Antriebsritzel 242 und 244 an dem angetriebenen Zahnrad 245 bewirkt den Vorteil, dass bei einem Übergang von Antreiben gegen und dann im Uhrzeigersinn bzw. umgekehrt kein Spiel in den Zahnzwischenräumen zum Tragen kommt und ein spielfreier und präziser Übergang beim Steuern erst gegen und dann im Uhrzeigersinn bzw. umgekehrt ermöglicht ist. Dies ermöglicht eine hervorragende Präzision der Steuerung der Schwenkbewegung des zweiten Schwenkarms 240.

Das andere Ende des zweiten Schwenkarms 240 hält den Spindelträgerarm 250, der an dem zweiten Schwenkarm 240 drehbar gelagert ist. Der zweite Schwenkarm 240 trägt hierbei den Antrieb 251 zum Antreiben der Drehbewegung des Spindelträgerarms 250 (siehe z.B. Fig. 7). Der Antrieb 251 ist beispielhaft als gekühlter Torqueantrieb ausgebildet.

Das andere Ende des Spindelträgerarms 250 hält den Fräskopf 260, der an dem Spindelträgerarm 250 drehbar gelagert ist. Der Spindelträgerarm 250 trägt hierbei den Antrieb 261 zum Antreiben der Drehbewegung des Fräskopfes 260 (siehe z.B. Fig. 14). Der Antrieb 261 ist beispielhaft als gekühlter Torqueantrieb ausgebildet.

Der Fräskopf 260 umfasst die bereits beschriebene Arbeitsspindel 210 sowie einen nicht dargestellten Spindelantrieb zum Antreiben der Arbeitsspindel für das rotatorische Antreiben des aufgenommenen Werkzeugs zum Erzeugen der Schnittbewegung.

An den Unterseiten der Spindelträgerschlitten 223 zeigen die Figs. 6 und 7 weiterhin beispielhaft Antriebe 224, die die mit angetriebenen Gewindemutterelementen (nicht dargestellt) an der Gewindewelle 150 eingreifen und die lineare Verfahrbewegung der Spindelträgerschlitten 223 in X-Richtung anzeigen können.

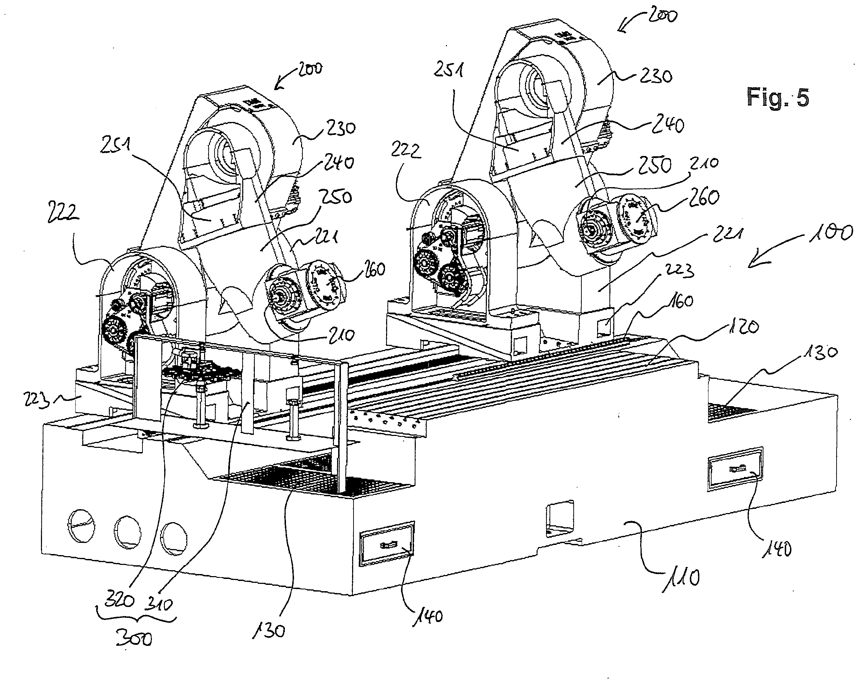

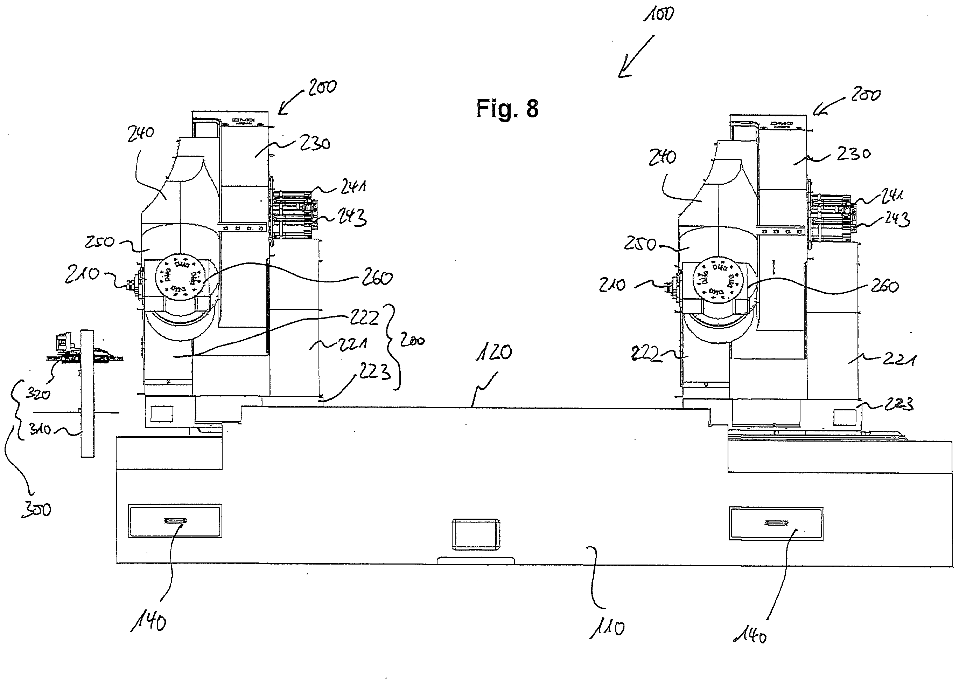

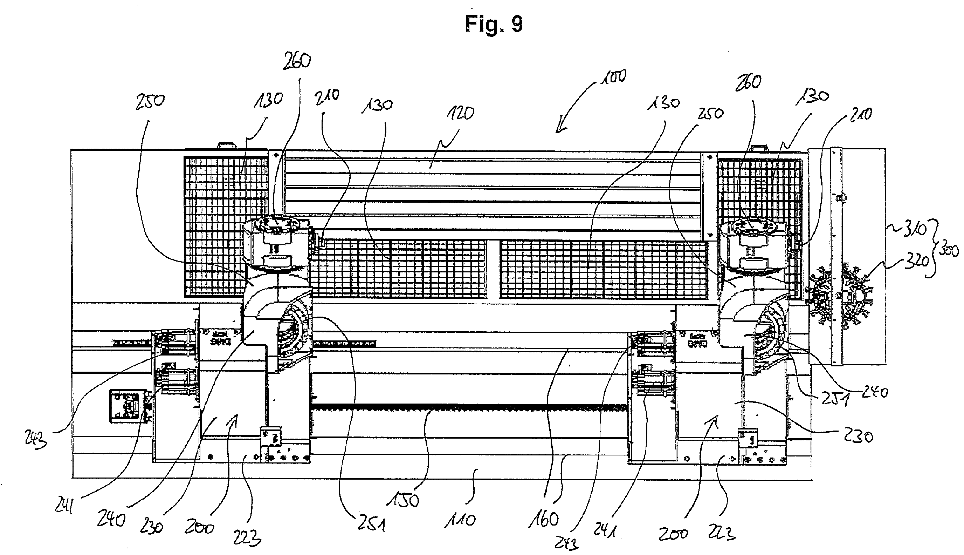

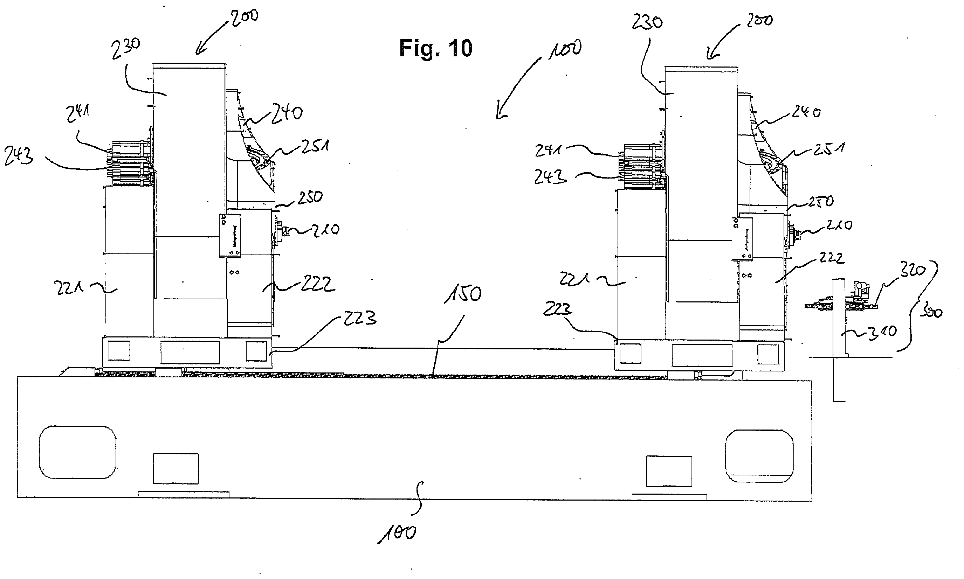

**Fig. 5** zeigt eine weitere beispielhafte Perspektivdarstellung der Werkzeugmaschine gemäß Fig. 1 von schräg oben links vorne, **Fig. 6** zeigt eine beispielhafte rechte Seitenansicht der Werkzeugmaschine gemäß Fig. 1, **Fig. 7** zeigt eine beispielhafte linke Seitenansicht der Werkzeugmaschine gemäß Fig. 1, **Fig. 8** zeigt eine beispielhafte Vorderansicht der Werkzeugmaschine gemäß Fig. 1, **Fig. 9** zeigt eine beispielhafte Draufsicht der Werkzeugmaschine gemäß Fig. 1 und **Fig. 10** zeigt eine beispielhafte Rückansicht der Werkzeugmaschine gemäß Fig. 1.

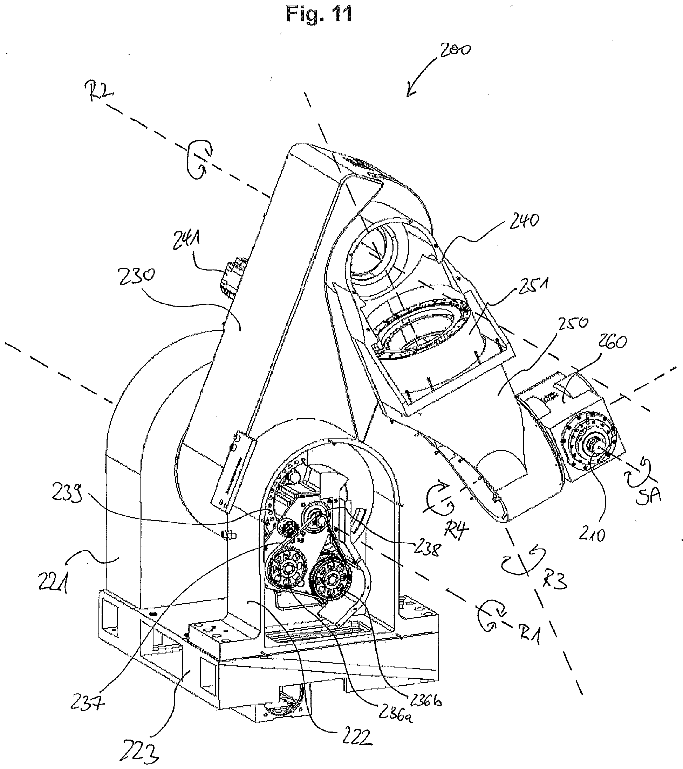

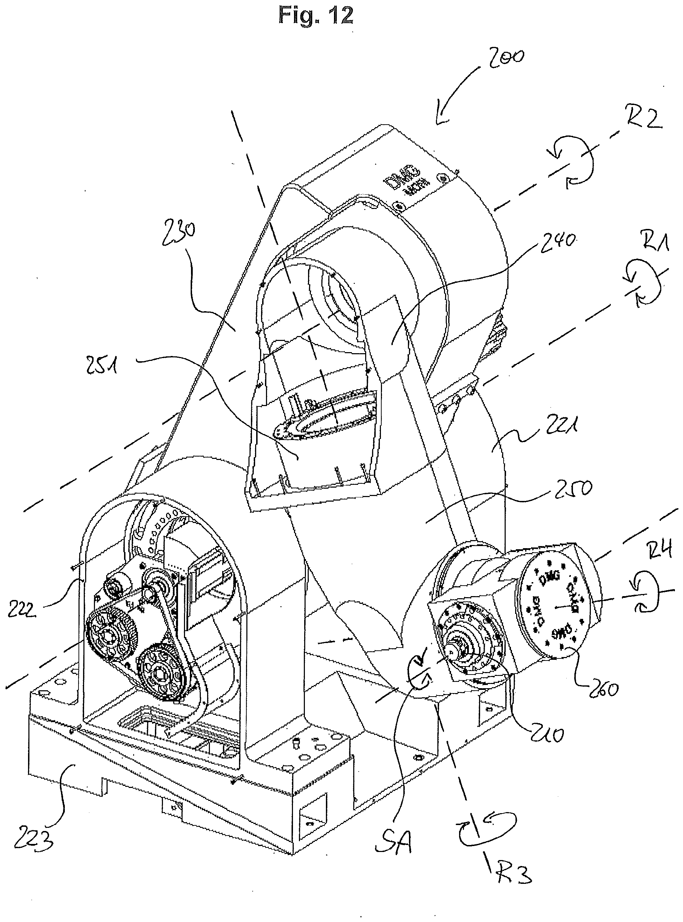

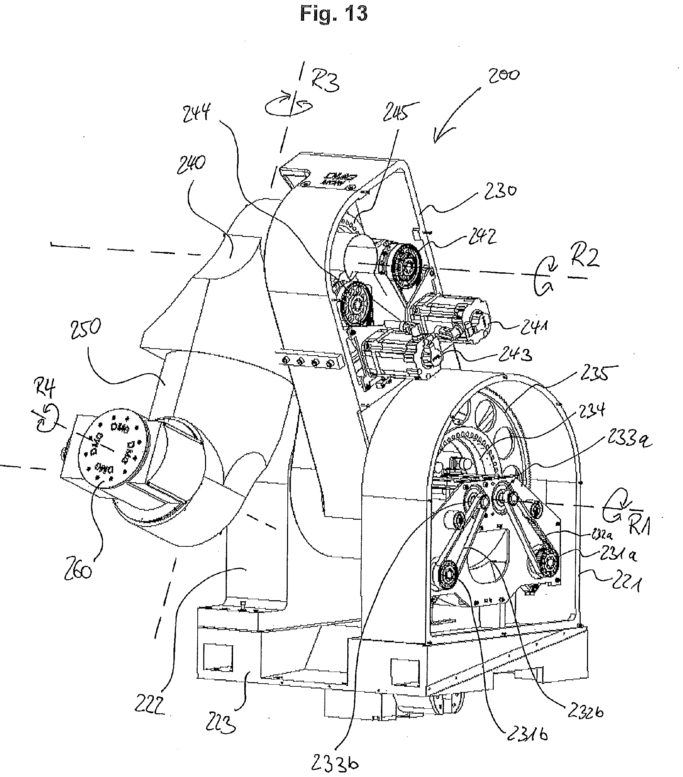

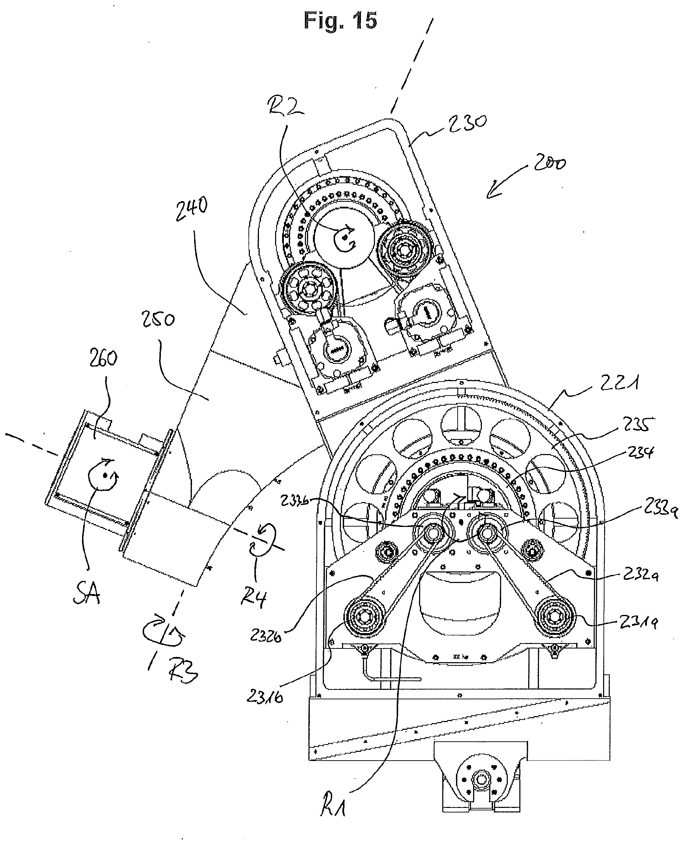

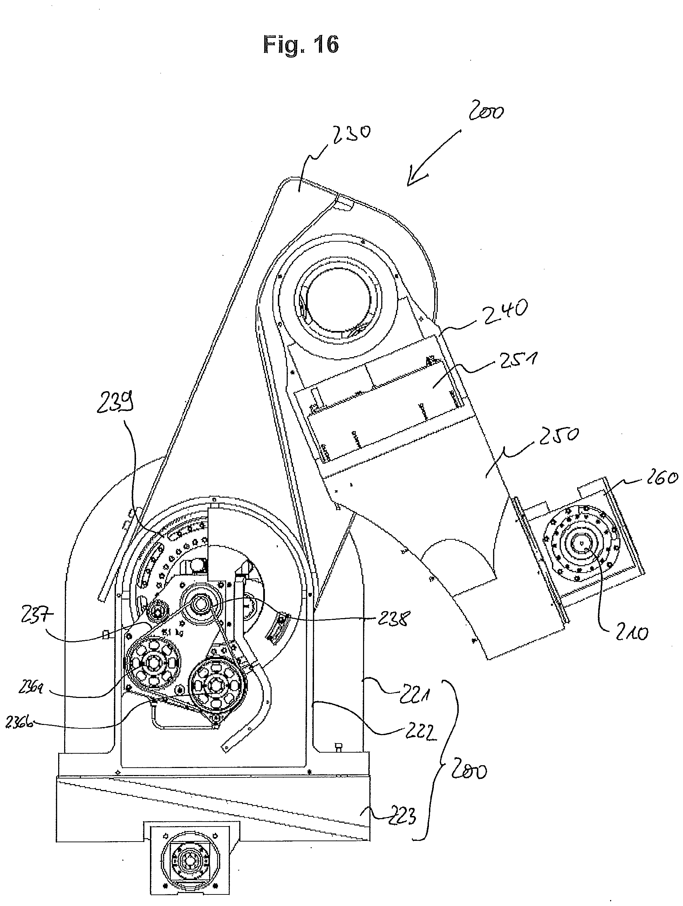

**Fig. 11** zeigt eine beispielhafte Perspektivdarstellungen einer Spindelträgerbaugruppe der Werkzeugmaschine aus Figs. 1 bis 10 gemäß einem Ausführungsbeispiel der Erfindung. Diese jedoch kann in beliebiger Anzahl auch an anderen Werkzeugmaschinen, Maschinengestellen, Maschinenbetten und Maschinenständern genutzt werden. **Figs. 12 bis 14** zeigen weitere Perspektivdarstellungen einer Spindelträgerbaugruppe gemäß Fig. 11, Fig. 15 zeigt eine beispielhafte rechte Seitenansicht der Spindelträgerbaugruppe gemäß Fig. 11 und Fig. 16 zeigt eine beispielhafte linke Seitenansicht der Spindelträgerbaugruppe gemäß Fig. 11.

Die Spindelträgerbaugruppe 200 weist einen Schwenkarmaufnahmeabschnitt 220 auf, der zwei Schwenkarmhaltekörper 221 und 222 aufweist, die beide auf einem Linearachsschlitten 223 angeordnet sind.

Der Linearachsschlitten 223 ist auf den Linearführungen 160 eines Maschinengestells 110 der Werkzeugmaschine 100 linear verfahrbar anordenbar. Die Schwenkarmhaltekörper 221 und 222 sind in der Verfahrrichtung (z.B. X-Richtung) nebeneinander auf dem Linearachsschlitten 223 angeordnet.

Zwischen den Schwenkarmhaltekörpern 221 und 222 wird ein Ende eines ersten Schwenkarms 230 schwenkbar gehalten. Der erste Schwenkarm 230 ist beispielhaft um eine erste Rotationsachse R1 schwenkbar gelagert, die beispielhaft parallel zu der Verfahrrichtung (z.B. X-Richtung) des Linearachsschlittens 223 ausgerichtet ist.

Das andere Ende des ersten Schwenkarms 230 hält einen weiteren zweiten Schwenkarm 240, und der zweite Schwenkarm 240 ist schwenkbar um eine zweite Rotationsachse R2 an dem ersten Schwenkarm 230 gelagert. Die ersten und zweiten Rotationsachsen R1 und R2 sind beispielhaft parallel zueinander ausgerichtet.

Das andere Ende des zweiten Schwenkarms 240 hält einen Spindelträgerarm 250, der an dem zweiten Schwenkarm 240 um eine dritte Rotationsachse R3 drehbar gelagert ist. Die dritte Rotationsachse R3 ist beispielhaft senkrecht zu der zweiten Rotationsachse R2 ausgerichtet.

Das andere Ende des Spindelträgerarms 250 hält einen Fräskopf 260, der an dem Spindelträgerarm 250 um eine vierte Rotationsachse R4 drehbar gelagert ist. Die vierte Rotationsachse R4 ist beispielhaft senkrecht zu der dritten Rotationsachse R3 ausgerichtet.

Der Fräskopf 260 umfasst die bereits beschriebene Arbeitsspindel 210 sowie einen nicht dargestellten Spindelantrieb zum Antreiben der Arbeitsspindel für das rotatorische Antreiben des aufgenommenen Werkzeugs um die Spindelachse SA zum Erzeugen der Schnittbewegung. Die Spindelachse SA ist beispielhaft senkrecht zu der vierten Rotationsachse R4 ausgerichtet.

Durch Verschwenken der ersten und zweiten Schwenkarme 230 und 240 kann der Fräskopf präzise in einer Ebene frei verfahren bzw. bewegt werden, die senkrecht zu der Verfahrrichtung (z.B. X-Richtung) des Linearachsschlittens 223 ausgerichtet ist.

Dies ermöglicht somit eine freiere Bewegung mit weniger Bauteilen, die zwei Linearachsen senkrecht zur Verfahrrichtung (z.B. X-Richtung) des Linearachsschlittens 223 ersetzt und dabei eine größere Bewegungsfreiheit bei gleichen Freiheitsgraden im Arbeitsraum ermöglicht.

Zudem ermöglichen die Drehbewegungen um die Rotationsachsen R3 und R4 eine freie Ausrichtung der Spindelachse in allen drei Raumrichtungen zur Bearbeitung eines Werkstücks aus jeder beliebigen Richtung.

Dies ermöglicht somit eine freiere Bewegung mit weniger Bauteilen und freierem Bearbeitungsraum mit einer größeren Bewegungsfreiheit im Arbeitsraum bei gleichen Freiheitsgraden einer Fünf-Achs-Fräsmaschine herkömmlicher Bauweise. Gleichzeitig können hochsteife Baugruppen mit hochpräzisen Antrieben und Schwenk- bzw. Rundachsen bereitgestellt werden, so dass gleiche bzw. sogar höhere Bearbeitungsgenauigkeiten erreicht werden können, wie bei Fünf-Achs-Fräsmaschinen herkömmlicher Bauweise (Fahrständerfräsmaschine).

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Zusammenfassend ermöglicht es die vorliegende Erfindung, ein Werkzeugmaschinenkonzept zu schaffen bzw. bereitzustellen, die eine Maschinenkinematik mit hoher Steifigkeit der Bauteile aufweist und gleichzeitig eine hohe Bewegungsflexibilität mit hohen Freiheitsgraden sowie eine hohe Bearbeitungsgenauigkeit bzw. Steuerungspräzision ermöglicht, und zudem eine effiziente, genaue und einfache Werkstückbearbeitung ermöglicht, insbesondere für das Ausführen von Fräsarbeiten an kleinen und großen Werkstücken aus Verbundwerkstoff, insbesondere kohlenstofffaserverstärktem Kunststoff bzw. CFK, an Freiformflächen.

Insbesondere kann somit ein Werkzeugmaschinenkonzept bereitgestellt werden, die bei dem Ausführen von Fräsarbeiten an Werkstücken aus Verbundwerkstoff, insbesondere kohlenstofffaserverstärktem Kunststoff bzw. CFK, flexiblere und gleichzeitig genaue Bearbeitungen bei hohen Stückzahlen ermöglicht. Es wird ein Maschinenkonzept bereitgestellt, das eine hohe Bearbeitungsbewegungsflexibilität bei hohen Freiheitsgraden hoher Steifigkeit und hoher Bearbeitungsgenauigkeit sowie -effizienz ermöglicht.

## Patentansprüche

1. Spindelträgerbaugruppe zum Einsatz an einer Werkzeugmaschine, mit
- einem auf einem Maschinenbett der Werkzeugmaschine anordenbaren bzw. anbringbaren Schwenkarmaufnahmeabschnitt (220),
- einem an dem Schwenkarmaufnahmeabschnitt um eine erste Rotationsachse (R1) schwenkbar gelagerten ersten Schwenkarm (230),
- einem an dem ersten Schwenkarm um eine zweite Rotationsachse (R2) schwenkbar gelagerten zweiten Schwenkarm (240),
- einem an dem zweiten Schwenkarm um eine dritte Rotationsachse (R3) drehbar gelagerten Spindelträgerarm (250),
- einem an dem Spindelträgerarm um eine vierte Rotationsachse (R4) drehbar gelagerten Fräskopf (260), und
- einer an dem Fräskopf gehaltenen Arbeitsspindel (210) zur Aufnahme eines Werkzeugs,
wobei die dritte Rotationsachse (R3) senkrecht oder quer zur vierten Rotationsachse (R4) ausgerichtet ist,
der Schwenkarmaufnahmeabschnitt (220) zwei Schwenkarmhaltekörper (221, 222) aufweist, und
wobei der erste Schwenkarm (230) zwischen den beiden Schwenkarmhaltekörpern (221, 222) schwenkbar gelagert gehalten ist;
**dadurch gekennzeichnet, dass**
einer (222) der Schwenkarmhaltekörper kleiner ausgebildet ist, als der andere Schwenkarmhaltekörper (221) der beiden Schwenkarmhaltekörper, wobei der zweite Schwenkarm (240) an der dem kleineren Schwenkarmhaltekörper (222) zugewandten Seite des ersten Schwenkarms (230) gehalten ist.

2. Spindelträgerbaugruppe gemäß Anspruch 1, **dadurch gekennzeichnet, dass**
die zweite Rotationsachse (R2) parallel zur ersten Rotationsachse (R1) ausgerichtet ist.

3. Spindelträgerbaugruppe gemäß Anspruch 1 oder 2, **dadurch gekennzeichnet, dass**
die dritte Rotationsachse (R3) senkrecht oder quer zur zweiten Rotationsachse (R2) ausgerichtet ist.

4. Spindelträgerbaugruppe gemäß einem der vorstehenden Ansprüche, **dadurch gekennzeichnet, dass**
eine Spindelachse (SA) der Arbeitsspindel (210) senkrecht oder quer zur vierten Rotationsachse (R4) ausgerichtet ist.

5. Spindelträgerbaugruppe gemäß einem der vorstehenden Ansprüche, **dadurch gekennzeichnet, dass**
ein Werkzeugspannabschnitt (120) relativ zu dem Schwenkarmaufnahmeabschnitt (220) auf dem Maschinenbett (110) in zumindest einer Linearachsrichtung (X) linear verfahrbar ist.

6. Spindelträgerbaugruppe gemäß einem der vorstehenden Ansprüche, **dadurch gekennzeichnet, dass**
der Schwenkarmaufnahmeabschnitt (220) auf einem Achsschlitten (223) angeordnet ist, der auf dem Maschinenbett (110) linear verfahrbar ist; und wobei
der Achsschlitten (223) in einer zur ersten Rotationsachse (R1) parallel ausgerichteten Richtung (X) linear verfahrbar ist.

7. Spindelträgerbaugruppe gemäß einem der vorstehenden Ansprüche, **dadurch gekennzeichnet, dass**
jeder der beiden Schwenkarmhaltekörper des Schwenkarmaufnahmeabschnitts (220) zumindest einen Antrieb zum Antreiben einer Schwenkbewegung des ersten Schwenkarms aufweist; und
jeder der beiden Schwenkarmhaltekörper des Schwenkarmaufnahmeabschnitts (220) zumindest ein verspanntes Getriebe zum Übertragen eines Drehmoments beim Antreiben einer Schwenkbewegung des ersten Schwenkarms aufweist; und wobei
jedes der verspannten Getriebe zumindest ein angetriebenes Antriebselement und zumindest zwei antreibende Antriebselemente aufweist, die gleichzeitig mit dem angetriebenen Antriebselement zusammenwirken.

8. Spindelträgerbaugruppe gemäß einem der vorstehenden Ansprüche, **dadurch gekennzeichnet, dass**
der erste Schwenkarm (230) zumindest einen Antrieb zum Antreiben einer Schwenkbewegung des zweiten Schwenkarms (240) aufweist; und/oder
der erste Schwenkarm (230) zumindest ein verspanntes Getriebe zum Übertragen eines Drehmoments beim Antreiben einer Schwenkbewegung des zweiten Schwenkarms (240) aufweist; und wobei
jedes der verspannten Getriebe zumindest ein angetriebenes Antriebselement und zumindest zwei antreibende Antriebselemente aufweist, die gleichzeitig mit dem angetriebenen Antriebselement zusammenwirken.

9. Spindelträgerbaugruppe gemäß einem der vorstehenden Ansprüche, **dadurch gekennzeichnet, dass**
der zweite Schwenkarm (240) zumindest einen Antrieb zum Antreiben einer Rotationsbewegung des Spindelträgerarms (250) aufweist; und wobei
der Antrieb zum Antreiben der Rotationsbewegung des Spindelträgerarms (250) als Torqueantrieb (251), insbesondere gekühlter Torqueantrieb, ausgebildet ist.

10. Spindelträgerbaugruppe gemäß einem der vorstehenden Ansprüche, **dadurch gekennzeichnet, dass**
der Spindelträgerarm (250) zumindest einen Antrieb zum Antreiben einer Rotationsbewegung des Fräskopfs (260) aufweist; und wobei
der Antrieb zum Antreiben der Rotationsbewegung des Fräskopfs (260) als Torqueantrieb (261), insbesondere gekühlter Torqueantrieb, ausgebildet ist.

11. Spindelträgerbaugruppe gemäß einem der vorstehenden Ansprüche, **gekennzeichnet durch**
ein Werkzeugmagazin (300) zum Lagern von einer Mehrzahl von Werkzeugen zum Ein- bzw. Auswechseln von Werkzeugen an der Arbeitsspindel (210).

12. Spindelträgerbaugruppe gemäß einem der vorstehenden Ansprüche, **dadurch gekennzeichnet, dass**
zusätzlich zu einer ersten Spindelträgerbaugruppe (200), die den Schwenkarmaufnahmeabschnitt, den ersten Schwenkarm, den zweiten Schwenkarm, den Spindelträgerarm, den Fräskopf und die Arbeitsspindel umfasst, eine zweite Spindelträgerbaugruppe auf dem Maschinenbett angeordnet ist; und wobei
die zweite Spindelträgerbaugruppe umfasst:
- einen auf einem Maschinenbett der Werkzeugmaschine angeordneten zweiten Schwenkarmaufnahmeabschnitt,
- einem an dem zweiten Schwenkarmaufnahmeabschnitt um eine fünfte Rotationsachse schwenkbar gelagerten dritten Schwenkarm,
- einem an dem dritten Schwenkarm um eine sechste Rotationsachse schwenkbar gelagerten vierten Schwenkarm,
- einem an dem vierten Schwenkarm um eine siebte Rotationsachse drehbar gelagerten zweiten Spindelträgerarm,
- einem an dem zweiten Spindelträgerarm um eine achte Rotationsachse drehbar gelagerten zweiten Fräskopf, und
- einer an dem zweiten Fräskopf gehaltenen zweiten Arbeitsspindel zur Aufnahme eines Werkzeugs,
wobei die siebte Rotationsachse senkrecht oder quer zur achten Rotationsachse ausgerichtet ist.

13. Spindelträgerbaugruppe gemäß Anspruch 12, **dadurch gekennzeichnet, dass**
die erste, zweite, fünfte und sechste Rotationsachse jeweils parallel zueinander ausgerichtet sind, wobei insbesondere die erste und fünfte Rotationsachse koaxial zueinander ausgerichtet sind.

14. Spindelträgerbaugruppe gemäß Anspruch 12 oder 13, **dadurch gekennzeichnet, dass**
die erste und zweite Spindelträgerbaugruppe in der Richtung der ersten und/oder fünften Rotationsachse nebeneinander auf dem Maschinenbett angeordnet sind.

15. Werkzeugmaschine zur spanenden Bearbeitung eines Werkstücks, umfassend eine Spindelträgerbaugruppe zum Einsatz an der Werkzeugmaschine gemäß einem der Ansprüche 1 bis 14.

## Claims

1. A spindle carrier assembly for use on a machine tool, comprising
- a swivel arm receiving portion (220) capable of being arranged or mounted on a machine bed of said machine tool,
- a first swivel arm (230) pivotally supported on said swivel arm receiving portion about a first axis of rotation (R1),
- a second swivel arm (240) pivotally supported on said first swivel arm about a second axis of rotation (R2),
- a spindle carrier arm (250) rotatably supported on said second swivel arm about a third axis of rotation (R3),
- a milling head (260) rotatably supported on said spindle carrier arm about a fourth axis of rotation (R4), and
- a work spindle (210) retained on said milling head for receiving a tool,
wherein said third axis of rotation (R3) is oriented perpendicularly or transversely with respect to said fourth axis of rotation (R4),
said swivel arm receiving portion (220) has two swivel arm retaining bodies (221, 222), and
wherein said first swivel arm (230) is retained in a pivotally supported manner between both swivel arm retaining bodies (221, 222);
**characterized in that**
one (222) of said swivel arm retaining bodies is formed smaller than the other swivel arm retaining body (221) of both swivel arm retaining bodies, wherein said second swivel arm (240) is retained at the side of said first swivel arm (230) facing said smaller swivel arm retaining body (222).

2. The spindle carrier assembly according to claim 1, **characterized in that**
said second axis of rotation (R2) is oriented in parallel to said first axis of rotation (R1).

3. The spindle carrier assembly according to claim 1 or 2, **characterized in that**
said third axis of rotation (R3) is oriented perpendicularly or transversely with respect to said second axis of rotation (R2).

4. The spindle carrier assembly according to one of the preceding claims, **characterized in that**
a spindle axis (SA) of said work spindle (210) is oriented perpendicularly or transversely with respect to said fourth axis of rotation (R4).

5. The spindle carrier assembly according to one of the preceding claims, **characterized in that**
a tool clamping portion (120) is linearly movable with respect to said swivel arm receiving portion (220) on said machine bed (110) in at least one linear axis direction (X).

6. The spindle carrier assembly according to one of the preceding claims, **characterized in that**
said swivel arm receiving portion (220) is arranged on an axis slide (223) which is linearly movable on said machine bed (110); and wherein
said axis slide (223) is linearly movable in a direction (X) oriented in parallel to said first axis of rotation (R1).

7. The spindle carrier assembly according to one of the preceding claims, **characterized in that**
each of said two swivel arm retaining bodies of said swivel arm receiving portion (220) has at least one drive for driving a swivel movement of said first swivel arm; and
each of said two swivel arm retaining bodies of said swivel arm receiving portion (220) has at least one interlocked gearing for transmitting a torque while driving a swivel movement of said first swivel arm; and wherein
each of said interlocked gearings has at least one driven drive element and at least two driving drive elements simultaneously interacting with said driven drive element.

8. The spindle carrier assembly according to one of the preceding claims, **characterized in that**
said first swivel arm (230) has at least one drive for driving a swivel movement of said second swivel arm (240); and/or
said first swivel arm (230) has at least one interlocked gearing for transmitting a torque while driving a swivel movement of said second swivel arm (240); and wherein
each of said interlocked gearings has at least one driven drive element and at least two driving drive elements simultaneously interacting with said driven drive element.

9. The spindle carrier assembly according to one of the preceding claims, **characterized in that**
said second swivel arm (240) has at least one drive for driving a rotary motion of said spindle carrier arm (250); and wherein
said drive for driving the rotary motion of said spindle carrier arm (250) is configured as a torque drive (251), in particular a cooled torque drive.

10. The spindle carrier assembly according to one of the preceding claims, **characterized in that**
said spindle carrier arm (250) has at least one drive for driving a rotary motion of said milling head (260); and wherein
said drive for driving the rotary motion of said milling head (260) is configured as a torque drive (261), in particular a cooled torque drive.

11. The spindle carrier assembly according to one of the preceding claims, **characterized by**
a tool magazine (300) for storing a plurality of tools for inserting and/or exchanging tools on said work spindle (210).

12. The spindle carrier assembly according to one of the preceding claims, **characterized in that**
in addition to a first spindle carrier assembly (200), which comprises said swivel arm receiving portion, said first swivel arm, said second swivel arm, said spindle carrier arm, said milling head, and said work spindle, a second spindle carrier assembly is arranged on said machine bed, and wherein
said second spindle carrier assembly comprises:
- a second swivel arm receiving portion arranged on a machine bed of said machine tool,
- a third swivel arm pivotally supported on said second swivel arm receiving portion about a fifth axis of rotation,
- a fourth swivel arm pivotally supported on said third swivel arm about a sixth axis of rotation,
- a second spindle carrier arm rotatably supported on said fourth swivel arm about a seventh axis of rotation,
- a second milling head rotatably supported on said second spindle carrier arm about an eighth axis of rotation, and
- a second work spindle retained on said second milling head for receiving a tool,
wherein said seventh axis of rotation is oriented perpendicularly or transversely with respect to said eighth axis of rotation.

13. The spindle carrier assembly according to claim 12, **characterized in that**
said first, second, fifth, and sixth axes of rotation are each oriented in parallel to one another, respectively, wherein, in particular, said first and fifth axes of rotation are oriented coaxially with respect to one another.

14. The spindle carrier assembly according to claim 12 or 13, **characterized in that**
said first and second spindle carrier assemblies are arranged next to one another on said machine bed in the direction of said first and/or fifth axis of rotation.

15. A machine tool for machining a workpiece, comprising a spindle carrier assembly for use on said machine tool according to one of claims 1 to 14.

## Revendications

1. Ensemble porte-broche destiné à être utilisé sur une machine-outil, comportant
- une portion de réception de bras pivotant (220) qui peut être disposée ou montée sur le bâti de la machine-outil,
- un premier bras pivotant (230) monté mobile en pivotement autour d'un premier axe de rotation (R1) sur la portion de réception de bras pivotant,
- un second bras pivotant (240) monté mobile en pivotement autour d'un second axe de rotation (R2) sur le premier bras pivotant,
- un bras porte-broche (250) monté mobile en rotation autour d'un troisième axe de rotation (R3) sur le second bras pivotant,
- une tête de fraisage (260) montée mobile en rotation autour d'un quatrième axe de rotation (R4) sur le bras porte-broche, et
- une broche de travail (210) maintenue sur la tête de fraisage et destinée à recevoir un outil,
dans lequel
le troisième axe de rotation (R3) est orienté perpendiculairement ou transversalement au quatrième axe de rotation (R4),
la portion de réception de bras pivotant (220) comporte deux corps de maintien de bras pivotant (221, 222), et
le premier bras pivotant (230) est maintenu mobile en pivotement entre les deux corps de maintien de bras pivotant (221, 222),
**caractérisé en ce que**
l'un (222) des corps de maintien de bras pivotant est réalisé plus petit que l'autre corps de maintien de bras pivotant (221) des deux corps de maintien de bras pivotant, le deuxième bras pivotant (240) étant maintenu sur le côté du premier bras pivotant (230) tourné vers le corps de maintien de bras pivotant plus petit (222).

2. Ensemble porte-broche selon la revendication 1,
**caractérisé en ce que**
le second axe de rotation (R2) est orienté parallèlement au premier axe de rotation (R1).

3. Ensemble porte-broche selon la revendication 1 ou 2,
**caractérisé en ce que**
le troisième axe de rotation (R3) est orienté perpendiculairement ou transversalement au second axe de rotation (R2).

4. Ensemble porte-broche selon l'une des revendications précédentes,
**caractérisé en ce que**
un axe (SA) de la broche de travail (210) est orienté perpendiculairement ou transversalement au quatrième axe de rotation (R4).

5. Ensemble porte-broche selon l'une des revendications précédentes,
**caractérisé en ce que**
une portion de serrage d'outil (120) est linéairement déplaçable par rapport à la portion de réception de bras pivotant (220) dans au moins une direction axiale linéaire (X) sur le bâti de machine (110).

6. Ensemble porte-broche selon l'une des revendications précédentes,
**caractérisé en ce que**
la portion de réception de bras pivotant (220) est agencé sur un chariot d'axe (223) qui est linéairement déplaçable sur le bâti de machine (110) ; et le chariot d'axe (223) est linéairement déplaçable dans une direction (X) orientée parallèlement au premier axe de rotation (R1).

7. Ensemble porte-broche selon l'une des revendications précédentes,
**caractérisé en ce que**
chacun des deux corps de maintien de bras pivotant de la portion de réception de bras pivotant (220) comprend au moins un entraînement pour entraîner un mouvement de pivotement du premier bras pivotant ; et chacun des deux corps de maintien de bras pivotant de la portion de réception de bras pivotant (220) comprend au moins un mécanisme de transmission serré pour transmettre un couple de rotation lors de l'entraînement d'un mouvement de pivotement du premier bras pivotant ; et chacun des mécanismes de transmission serrés comprend au moins un élément d'entraînement mené et au moins deux éléments d'entraînement menant qui coopèrent simultanément avec l'élément d'entraînement mené.

8. Ensemble porte-broche selon l'une des revendications précédentes,
**caractérisé en ce que**
le premier bras pivotant (230) comprend au moins un entraînement pour entraîner un mouvement de pivotement du second bras pivotant (240) ; et/ou
le premier bras pivotant (230) comprend au moins un mécanisme de transmission serré pour transmettre un couple de rotation lors de l'entraînement d'un mouvement de pivotement du second bras pivotant (240) ; et
chacun des mécanismes de transmission serrés comprend au moins un élément d'entraînement mené et au moins deux éléments d'entraînement menant qui coopèrent simultanément avec l'élément d'entraînement mené.

9. Ensemble porte-broche selon l'une des revendications précédentes,
**caractérisé en ce que**
le second bras pivotant (240) comprend au moins un entraînement pour entraîner un mouvement de rotation du bras porte-broche (250) ; et l'entraînement pour entraîner le mouvement de rotation du bras porte-broche (250) est réalisé sous forme d'entraînement à couple (251), en particulier sous forme d'entraînement à couple refroidi.

10. Ensemble porte-broche selon l'une des revendications précédentes,
**caractérisé en ce que**
le bras porte-broche (250) comprend au moins un entraînement pour entraîner un mouvement de rotation de la tête de fraisage (260) ; et l'entraînement pour entraîner le mouvement de rotation de la tête de fraisage (260) est réalisé sous forme d'entraînement à couple (261), en particulier sous forme d'entraînement à couple refroidi.

11. Ensemble porte-broche selon l'une des revendications précédentes,
**caractérisé par**
un magasin à outils (300) destiné à stocker une pluralité d'outils pour insérer ou échanger des outils sur la broche de travail (210).

12. Ensemble porte-broche selon l'une des revendications précédentes,
**caractérisé en ce que**
en supplément à un premier ensemble porte-broche (200) comprenant la portion de réception de bras pivotant, le premier bras pivotant, le second bras pivotant, le bras porte-broche, la tête de fraisage et la broche de travail, il est prévu un second ensemble porte-broche agencé sur le bâti de machine ; et
le second ensemble porte-broche comprend :
- une seconde portion de réception de bras pivotant agencée sur un bâti de la machine-outil,
- un troisième bras pivotant monté mobile en pivotement autour d'un cinquième axe de rotation sur la seconde portion de réception de bras pivotant,
- un quatrième bras pivotant monté mobile en pivotement autour d'un sixième axe de rotation sur le troisième bras pivotant,
- un second bras porte-broche monté mobile en rotation autour d'un septième axe de rotation sur le quatrième bras pivotant,
- une seconde tête de fraisage montée mobile en rotation autour d'un huitième axe de rotation sur le second bras porte-broche, et
- une seconde broche de travail maintenue sur la seconde tête de fraisage et destinée à recevoir un outil,
dans lequel
le septième axe de rotation est orienté perpendiculairement ou transversalement au huitième axe de rotation.

13. Ensemble porte-broche selon la revendication 12,
**caractérisé en ce que**
les premier, second, cinquième et sixième axes de rotation sont orientés chacun parallèlement les uns aux autres, et en particulier les premier et cinquième axes de rotation sont orientés coaxialement l'un par rapport à l'autre.

14. Ensemble porte-broche selon la revendication 12 ou 13,
**caractérisé en ce que**
les premier et second ensembles porte-broche sont agencés l'un à côté de l'autre dans la direction du premier et/ou cinquième axe de rotation sur le bâti de machine.

15. Machine-outil pour l'usinage d'une pièce par enlèvement de copeaux, comportant un ensemble porte-broche destiné à être utilisé sur la machine-outil selon l'une des revendications 1 à 14.
